# EUROPEAN PATENT SPECIFICATION

(11) **EP 4 181 687 B1**
(45) Date of publication and mention of the grant of the patent: **25.06.2025**
(21) Application number: 21743187.3
(22) Date of filing: 14.07.2021
(51) Int. Cl.: A23J 1/14, A23L 33/185, A23L 11/00, A23L 25/00, A23L 19/00, A23J 3/22, A23L 11/40, A23L 31/00

(54) **EXQUISITE VEGAN CONVENIENCE FOODS AND PRODUCTION THEREOF**
EXQUISITE VEGANE FERTIGGERICHTE UND DEREN HERSTELLUNG
ALIMENTS VÉGAN EXQUIS PRÊTS À L'EMPLOI ET LEUR PRODUCTION

(30) Priority: 15.07.2020 EP 20185953
(43) Date of publication of application: 24.05.2023
(73) Proprietor: Kaeppeli, Othmar, 5436 Würenlos (CH)
(72) Inventor: Kaeppeli, Othmar, 5436 Würenlos (CH)
(74) Representative: Latscha Schöllhorn Partner AG
(86) International application number: PCT/EP2021/069651
(87) International publication number: WO 2022/013308

(56) References cited:
- WO-A1-2020/127358
- FR-A3- 3 085 826
- US-A1- 2013 084 361

## Description

The present invention relates to a novel methodology for the fabrication of exquisite vegan convenience food (VCF). It comprises disruption of the structure of the natural raw material and formation of the VCF structure by sophisticated inventive processing based on relevant raw material properties. The composition of such inventive nutrition is adaptable to common and personalized nutritional requirements.

### Background

The current concern about animal source food consumption relates to many aspects: health, social life, food behaviours, animal welfare, natural resources exploitation, and environmental impact of the entire food chain. People are more sensitive about these topics and they are shifting individual food habits in favour of more plant-based diets with reduced environmental impacts. Surveys provide a concise view of the increasing percentage of both vegetarians and vegans (S. Eker et al., "Meat or not? - A model-based analysis of the global diet change dynamics", The 36th International Conference of the System Dynamics Society, 6-10 August 2018, Reykjavik, Icel*and*)*.*

Vegan foods are defined as diets free of animal-based raw materials such as meat, dairy products, eggs, and honey (www.vegan.com/what/). Taking animal source foods (ASF) as benchmark, plant source foods (PSF) are generally considered to be of lower nutritional quality. For example, it is asserted that ASF provide the human body more readily a required small set of indispensable amino acids in a defined proportion. These indispensable amino acids are present in roughly the same proportion in most ASF but are often found in different proportions in PSF.

On the other hand, distinct changes in the understanding of the role of foods in human health have occurred within the last decades shifting attention predominantly to PSF research. The focus of scientific investigations has moved from the primary role of food as the source of energy and body-forming substances to the more subtle function of active food ingredients (AFI) targeting human health. AFI tend to become a distinct class of PSF compounds. They are not essential for growth and development but to maintain adequate body functions throughout all stages of life. They are lifespan essentials and correspond to naturally bioactive substances occurring in conventional PSF. Frequently mentioned are soluble and insoluble polysaccharides, oligosaccharides, antioxidants, omega-3 fatty acids, peptides and phospholipids. Research is fuelled by a steadily growing evidence for AFI being involved in stimulating good health and in preventing chronic diseases by contributing to the body's inflammatory state and to microbiome and epigenome regulation (L. Galland, Nutr Clin Pract. 2010, 25:634-640; M. A. J. Hullar and B. C. Fu, Cancer J. 2014, 20(3): 170-175: C. Martin et al., Annual Review of Plant Biology 2013, 64:19-46; C. Tiffon, Int. J. Mol. Sci. 2018, 19:3425).

The overwhelming potential of PSF has been exploited by issuing meal plans including recommendations for cooking and serving regimes. Such diets are based on PSFs most adequate for providing key nutrients as for example oat, sweet potato, whole wheat pasta and brown rice for starchy foods; or beans, lentils, chickpeas, tofu, soya alternatives to milk and yoghurt and peanuts for protein rich foods. Fruits, vegetables, legumes, oleaginous seeds like flaxseeds or chia seeds are recommended to match suggested dietary guidelines and provide health benefits attributed to AFI. However, these diet recommendations are hardly nutritionally balanced meaning that for example protein intake may be unbalanced in relation to starch, fibre, fat or sugar intake. Furthermore, the bioavailability of nutrients and AFI is hardly optimal with the existing approach of providing PSF diets.

WO 2020/127358 A1 discloses a vegan food composition and a method of making a vegan food composition comprising: a. Mixing at least 30 wt% legume and at least 20 wt% non-legume seed or non legume nuts on a dry basis; b. Reducing the D90 particle size to less than 1000 microns, preferably by milling; c. Adding an aqueous phase, preferably water; d. Adding enzyme to prevent gelation, heating, and de-activating the enzyme; e. Optionally, reducing the D90 particle size to below 500 microns, optionally using a colloidal mill; f. Reducing particle size so that the D90 particle size is less than 400 microns, preferably by micronization; g. Optionally evaporating; h. Homogenising; i. Sterilizing or pasteurizing; and j. Optionally drying.

### Summary of the invention

The present invention discloses a method of making a vegan food composition. It involves the disruption of the structure of the natural vegan compatible raw material and creation of the VCF structure by sophisticated inventive processing taking advantage of relevant properties of vegan compatible raw material. VCF contain all nutrients and active ingredients of the vegan compatible raw materials used. The composition of such nutrition is adaptable to common and personalized nutritional requirements.

Thus, in a first aspect the method of the present invention provides VCF preferably consisting of a single or a blend of two or more vegan compatible raw materials, wherein said vegan compatible raw material is selected from (i) fresh or dried vegan compatible raw materials; (ii) pomaces of de-juiced vegan compatible raw materials; (iii) press cakes of de-oiled vegan compatible raw materials, and (iv) by-products of preparatory processing like cutting, slicing or hulling of vegan compatible raw materials; wherein said blends are compiled according to pursued nutritional goals required by pertinent nutritional science knowledge or personalized nutrition requirements.

In another aspect, the present invention provides a process for producing the inventive VCF from a vegan compatible raw material, wherein said process comprises
- comminuting a vegan compatible raw material into a powder or a slurry by dry milling, cryo-milling, bowl cutting or homogenisation;
- converting a powder and/or a slurry of a single or a blend of two or more vegan compatible raw materials into a VCF.

Further aspects and embodiments of the present invention will become apparent as this description continues and are defined in the appended claims.

### Detailed description of the invention

Unless otherwise defined, all terms of art, notations and other scientific terminology used herein are intended to have the meanings commonly understood by those of skill in the art to which this invention pertains. The herein described and disclosed embodiments, preferred and very preferred embodiments should apply to all aspects and other embodiments, preferred and very preferred embodiments irrespective of whether is specifically again referred to or its repetition is avoided for the sake of conciseness.

In another aspect, the present invention provides a process for producing a vegan convenience food (VCF), wherein said process comprises, preferably consists of,
(a) providing
   (i) a single vegan compatible raw material, or
   (ii) a blend of two or more vegan compatible raw materials,
      wherein said single vegan compatible raw material (i) and wherein at least one of said two or more vegan compatible raw materials of said blend (ii) comprises a native binder component, or
   (iii) a mixture comprising, preferably consisting of, a single vegan compatible raw material and at least one, preferably one, vegan compatible binder component, or
   (iv) a mixture comprising, preferably consisting of, a blend of two or more vegan compatible raw materials and at least one, preferably one, vegan compatible binder component;
(b) comminuting said vegan compatible raw material (i), said blend of vegan compatible raw materials (ii) or said mixture (iii) or (iv) into a powder with a particle size between 100 and 1'000 µm, preferably by dry milling or cryo-milling; or
   comminuting said vegan compatible raw material (i), said blend of vegan compatible raw materials (ii) or said mixture (iii) or (iv) into a slurry, preferably by bowl cutting or homogenization, and optionally converting said slurry into a powder by lyophilisation or another drying method, wherein said another drying method, preferably by lyophilisation;
(c) adding water to said powder or said slurry of step b) to make a paste with a water content between 10 and 90 % (dry weight basis), preferably between 20 and 70 % (dry weight basis);
(d) portioning or 3D-printing the paste of step (c) into a VCF shape, wherein preferably said VCF shape is selected from stockpile pieces, strips, sausages, ready-to-fry flat designs or any other VCF shapes;
(e) wet heating the portioned paste of step (d) for solidifying said paste to generate the VCF; wherein the steps (a) to (e) are effected in said given order, and wherein said process does not comprise the addition or usage of an enzyme.

Preferably wet heating, is effected by steaming or putting in hot water at a temperature between 50°C to 100°C, preferably between 80°C to 100°C for 3 min or more, typically for a period of 5 minutes to 2 hours, preferably for a period of 5 minutes to 1 hour, further preferably for a period of 5 to 30 minutes or for a period of 5 to 15 minutes.

The steps (a) to (e) are effected in said and given order within the inventive method.

The term "vegan convenience food" refers to an edible convenience food, thus an edible ready-to-eat vegan food, which is entirely devoid of animal products or animal derived products such as including without limitation meat, eggs, dairy products and honey.

The term "vegan compatible raw material", as used herein refers to edible materials compatible with veganism, as they occur in nature such as plants. In a preferred embodiment, the term vegan compatible raw material, as used herein refers to (i) harvested naturally occurring edible parts of plants such as herbs, nuts, berries, seeds, grains, cereals, spices, vegetables; (ii) harvested naturally occurring mushrooms; (iii) harvested naturally occurring or industrially cultivated algae and/or (iv) harvested industrially cultivated microorganisms.

In a preferred embodiment, said optional conversion of said slurry into a powder is effected by lyophilisation or another drying method, wherein said another drying method, is preferably selected from vacuum oven drying and spray drying.

Spray drying is relatively inexpensive, but requires the use of typically relative large amounts of carrier material. More commonly, said optional conversion is accomplished using vacuum oven drying or lyophilisation. In the case of vacuum oven drying, the slurry is typically transferred to drying trays and the trays are inserted into a vacuum oven, whereupon the water is evaporated by heating (usually below 100°C) under reduced pressure. Most preferably, said optional conversion of said slurry into a powder is accomplished by lyophilisation.

The wet warming or wet heating, preferably wet heating, refers to an operation for performing heating using water as a heat medium, and specifically means steaming, braising and boiling with water having a temperature of between 50°C to 100°C, preferably between 60°C to 100°C, further preferably between 70°C to 100°C, and again further preferably between 80°C to 100°C. Heating not using water as a heat medium is not included in said wet warming or wet heating, preferably wet heating, in accordance with the present invention.

In a further embodiment, said solidifying of said paste to generate the VCF does not comprise the use of dry heat, wherein typically and preferably said heat is a temperature higher than 100°C, and thus said solidifying of said paste to generate the VCF does not comprise dry heating, wherein typically and preferably said heat is a temperature higher than 100°C, of said paste to generate the VCF.

In a further embodiment, the step for solidifying of said paste to generate the VCF does not comprise the use of dry heat, wherein typically and preferably said heat is a temperature higher than 100°C, and thus the step for solidifying of said paste to generate the VCF does not comprise dry heating, wherein typically and preferably said heat is a temperature higher than 100°C, of said paste to generate the VCF.

In a further embodiment, said solidifying of said paste to generate the VCF does not comprise the use of extruding means and thus said solidifying of said paste to generate the VCF does not comprise extrusion of said paste to generate the VCF. In a further embodiment, said solidifying of said paste to generate the VCF does not comprise extrusion cooking of said paste to generate the VCF. Further, said solidifying of said paste to generate the VCF does not comprise application of shear energy and/or shear stress and/or increased pressure and/or high dry heat (wherein typically and preferably said heat is a temperature higher than 100°C), as typically applied in extrusion cooking, which is a technology based on thermal processes of high-temperature short time and which can be, and is typically, defined as a continuous process in which materials, such as proteins and starches, are plasticized to form a fluid melt in a chamber or barrel as a result of high temperature, pressure, and shear stress, causing the material to be conveyed and forced to flow through a die of specific shape (MG Ruiz-Gutierrez, MA Sanchez-Madrigal and A Quintero-Ramos, The Extrusion Cooking Process for the Development of Functional Foods, http://dx.doi.org/10.5772/intechopen.68741).

In a further embodiment, the step for solidifying of said paste to generate the VCF does not comprise the use of extruding means and thus the step for solidifying of said paste to generate the VCF does not comprise extrusion of said paste to generate the VCF. In a further embodiment, the step for solidifying of said paste to generate the VCF does not comprise extrusion cooking of said paste to generate the VCF. Further, the step for solidifying of said paste to generate the VCF does not comprise application of shear energy and/or shear stress and/or increased pressure and/or high dry heat (wherein typically and preferably said heat is a temperature higher than 100°C), as typically applied in extrusion cooking.

In a further embodiment, said inventive process does not comprise extrusion. In a further embodiment, said inventive process does not comprise an extrusion step. In a further embodiment, said inventive process does not comprise extrusion cooking. In a further embodiment, said inventive process does not comprise an extrusion cooking step. In a further embodiment, said inventive process does not comprise application of shear energy and/or shear stress to said vegan compatible raw material(s) or mixtures thereof. Further, said inventive process, preferably in the step comprising said solidifying of said paste to generate the VCF, does not comprise application of shear energy and/or shear stress and/or increased pressure and/or high dry heat (wherein typically and preferably said heat is a temperature higher than 100°C), as typically applied in extrusion cooking.

In a further embodiment, said providing (a) is a provision of (i) a single vegan compatible raw material, wherein said single vegan compatible raw material comprises a native binder component.

In a further embodiment, said providing (a) is a provision of (ii) a blend of two or more vegan compatible raw materials, wherein at least one of said two or more vegan compatible raw materials of said blend (ii) comprises a native binder component.

In a further embodiment, said providing (a) is a provision of (iii) a mixture comprising, preferably consisting of, a single vegan compatible raw material and at least one, preferably one, vegan compatible binder component.

In a further embodiment, said providing (a) is a provision of (iv) a blend of two or more vegan compatible raw materials and at least one, preferably one, vegan compatible binder component.

In a further preferred embodiment, said step (c) of making a paste does not comprise the addition of any other vegan compatible component to said powder or said slurry.

In a further preferred embodiment, said process does not comprise the addition or usage of an enzyme.

In a further embodiment, said step (c) of making a paste further comprises addition of a vegan compatible oil to said powder or said slurry. In a further embodiment, said step (c) of making a paste does not comprise the addition of a vegan compatible oil to said powder or said slurry. In a further embodiment, said step (c) of making a paste does not comprise the addition of any other vegan compatible component to said powder or said slurry. In a further embodiment, said step (c) of making a paste does not comprise the addition of any other non-vegan or non-vegan compatible component to said powder or said slurry such as an enzyme.

In a further embodiment, said adding water to said powder or said slurry of step (b) is adding water to said powder or said slurry which powder or slurry directly resulted from said comminuting said vegan compatible raw material (i), said blend of vegan compatible raw materials (ii) or said mixture (iii) or (iv) as described in step (b).

In a further embodiment, said adding water to said powder or said slurry of step (b) is adding water to said powder or said slurry which powder or slurry resulted from said comminuting said vegan compatible raw material (i), said blend of vegan compatible raw materials (ii) or said mixture (iii) or (iv) as described in step (b) without any further processing step.

In a further embodiment, said adding water to said powder or said slurry of step (b) is adding water to said powder or said slurry which powder or slurry resulted from said comminuting said vegan compatible raw material (i), said blend of vegan compatible raw materials (ii) or said mixture (iii) or (iv) as described in step (b) without any further processing step apart from the optional converting said slurry into a powder by lyophilisation or another drying method and/or an optional spicing of said powder or slurry and/or addition of a vegan compatible oil to said powder or said slurry.

In a further preferred embodiment, said process of producing said VCF does not comprise the addition or usage of an enzyme. In a further preferred embodiment, said process of producing said VCF does not comprise the addition or usage of an enzyme which is not native of or naturally occurring within said single vegan compatible raw material or said blend of vegan compatible raw materials. In a further preferred embodiment, said process of producing said VCF does not comprise the addition or usage of an enzyme which is not native of or naturally occurring within said single vegan compatible raw material or said blend of vegan compatible raw materials to effect any change of said single vegan compatible raw material or said blend of vegan compatible raw materials such as gelation or heating or other structural change. Enzymes such as amylases are often used and added as further processing aid in the food industry. In a preferred embodiment, the present invention explicitly disclaims the use of such enzymes for the production of its VCF.

In a further embodiment, said process of producing said VCF comprises the optional spicing of said paste of step (c). In a further embodiment, said process of producing said VCF comprises the spicing of said paste of step (c).

Said spice or seasoning used in a or said spicing or optional spicing refers to a seasoning utilizing a (i) part of a plant such as the fruit, flower or seed of said plant which having a unique flavor, stimulating taste, and color tone, and/or (ii) common salt used in a common salt-containing food product such as chlorides and iodides such as calcium and sodium chloride, and which spice or seasoning is added to said paste for purpose of aromatization, seasoning, coloration and the like. Examples of such spices include further herbs such as pepper, garlic, ginger, coriander, sesame cinnamon, paprika, cardamom, saffron, basil, thyme, allspice, oregano, rosemary, peppermint, lemon grass and the like. These spices may be used alone as a single type, or may also be used in any given combination of two or more types at any given ratio.

In a further embodiment, said process of producing said VCF does not comprise the optional spicing of said paste of step (c). In a further embodiment, said process of producing said VCF does not comprise the spicing of said paste of step (c). In a further embodiment, said process of producing said VCF does not comprise the addition or usage of any other vegan or vegan compatible component. In a further embodiment, said process of producing said VCF does not comprise the addition or usage of any other non-vegan or non-vegan compatible component.

In a further preferred embodiment, said vegan compatible raw material is selected from a plant, a mushroom, an algae or a microorganism.

In a further preferred embodiment, said vegan compatible raw material is selected from a plant, a mushroom, an algae or a microorganism.

In a further preferred embodiment, said vegan compatible raw material is selected from the whole edible part of a plant, a mushroom, an algae or a microorganism, or a by-product thereof, wherein preferably said by-product, preferably directly, resulted from cutting, slicing and/or hulling said vegan compatible raw material.

In a further preferred embodiment, said vegan compatible raw material is selected from the whole edible part of a plant, a mushroom, an algae or a microorganism.

In a further preferred embodiment, said vegan compatible raw material is selected from the whole edible part of a plant, a mushroom, an algae or a microorganism, or a by-product thereof, wherein said by-product, preferably directly, resulted from cutting, slicing and/or hulling said vegan compatible raw material.

In a further preferred embodiment, said vegan compatible raw material is selected from the whole edible part of a plant, a mushroom, an algae or a microorganism, or a by-product thereof, wherein said by-product directly resulted from cutting, slicing and/or hulling said vegan compatible raw material.

In a further preferred embodiment, said vegan compatible raw material is selected from the whole edible part of a harvested naturally occurring plant, mushroom or algae, the whole edible part of a harvested industrially cultivated algae or microorganism, the whole edible part of a dried, de-juiced and/or de-oiled vegan compatible raw material, or a by-product thereof, wherein preferably said by-product, preferably directly, resulted from cutting, slicing and/or hulling said vegan compatible raw material.

The term "harvested naturally occurring plants, mushrooms or algae", as used herein, refers to vegan compatible raw materials such as plants, mushrooms and algae in a state and condition as they are and occur in nature and as they are upon harvesting but without any further processing which processing has an impact on and/or amends the ingredients and/or the structure and/or the tissue of the edible parts of said vegan compatible raw materials. Processing should not include processing steps which has no impact on and/or which does not amend the ingredients and/or the structure and/or the tissue of said edible parts of said vegan compatible raw materials but which may be or are effected upon harvesting and prior to delivery for further food processing such as simple cleaning steps such as washing with water at ambient temperature.

The term "harvested industrially cultivated algae or microorganisms", as used herein, refers to vegan compatible raw materials such as algae or microorganisms in a state and condition as they are upon industrial harvesting but without any further processing which processing has an impact on and/or amend the ingredients and/or the structure and/or the tissue of the edible parts of said vegan compatible raw materials. Processing should not include processing steps which has no impact and/or which do not amend the ingredients and/or the structure and/or the tissue of said edible parts of said vegan compatible raw materials but may and are effected upon industrial harvesting and prior to delivery for further food processing.

Typically, and preferably, the term "vegan compatible raw material" as used herein refers to the whole edible part of a vegan compatible raw material such as the entire berry, nut, seed or grain which are used for generating VCF from a single vegan compatible raw material or blends of such in accordance with the present invention. Such processing and usage of the whole edible part of a vegan compatible raw material ensures that the VCF contains all the nutrients as well as all health active food ingredients (AFI) without generating additional waste.

In a still further extended embodiment, the term vegan compatible raw materials, as used herein, refers to edible (i) dried vegan compatible raw materials; (ii) by-products from cut, sliced, hulled vegan compatible raw materials; (iii) pomaces from by way of a mechanical press de-juiced vegan compatible raw materials (iv) press cakes from preferably by way of a cold pressing de-oiled vegan compatible raw materials. Such further extended embodiment is further beneficial to reduce food waste since typically said defined vegan compatible raw materials derive from classical food processing and would be considered as waste. The generation of VCF in accordance with the present invention and using said vegan compatible raw materials is thus further beneficial for reducing food waste but still ensure to contain most of the nutrients as well as all health active food ingredients (AFI) of the underlying harvested naturally occurring or harvested industrially cultivated vegan compatible raw materials.

In a further preferred embodiment, said vegan compatible raw material is selected from the whole edible part of a dried, de-juiced and/or de-oiled vegan compatible raw material, or a by-product thereof, wherein preferably said by-product, preferably directly, resulted from cutting, slicing and/or hulling said vegan compatible raw material.

In a further preferred embodiment, said vegan compatible raw material is selected from the whole edible part of a dried, de-juiced and/or de-oiled vegan compatible raw material, or a by-product thereof, wherein preferably said by-product, preferably directly, resulted from cutting, slicing and/or hulling said vegan compatible raw material, and wherein said de-juicing is effected by mechanical pressing said vegan compatible raw material, and/or wherein said de-oiling is effected by cold pressing said vegan compatible raw material In a further preferred embodiment, said vegan compatible raw material is selected from the whole edible part of a harvested naturally occurring plant, mushroom or algae, the whole edible part of a harvested industrially cultivated algae or microorganism, or a by-product thereof, wherein preferably said by-product, preferably directly, resulted from cutting, slicing and/or hulling said vegan compatible raw material.

In a further preferred embodiment, said vegan compatible raw material is selected from the whole edible part of a harvested naturally occurring plant, mushroom or algae, the whole edible part of a harvested industrially cultivated algae or microorganism, or a by-product thereof, wherein preferably said by-product, preferably directly, resulted from cutting, slicing and/or hulling said vegan compatible raw material.

In a further preferred embodiment, said vegan compatible raw material is selected from the whole edible part of a dried, de-juiced and/or de-oiled vegan compatible raw material, or a by-product thereof, wherein preferably said by-product, preferably directly, resulted from cutting, slicing and/or hulling said vegan compatible raw material.

In a further preferred embodiment, said vegan compatible raw material is selected from the whole edible part of a dried, de-juiced and/or de-oiled vegan compatible raw material, or a by-product thereof, wherein preferably said by-product, preferably directly, resulted from cutting, slicing and/or hulling said vegan compatible raw material, and wherein said dried, de-juiced and/or de-oiled vegan compatible raw material, or said by-product thereof, is typically and preferably directly resulted from dyring, de-juicing and/or de-oiling harvested naturally occurring plant, mushroom or algae, or harvested industrially cultivated algae or microorganism.

In a further preferred embodiment, said vegan compatible raw material is selected from the whole edible part of a dried, de-juiced and/or de-oiled vegan compatible raw material, or a by-product thereof, wherein preferably said by-product, preferably directly, resulted from cutting, slicing and/or hulling said vegan compatible raw material, and wherein said de-juicing is effected by mechanical pressing said vegan compatible raw material, and/or wherein said de-oiling is effected by cold pressing said vegan compatible raw material.

In a further preferred embodiment, said vegan compatible raw material is selected from the whole edible part of a dried, a pomace or a press cake of a vegan compatible raw material, or a by-product thereof, wherein preferably said by-product, preferably directly, resulted from cutting, slicing and/or hulling said vegan compatible raw material, and wherein said pomace, typically and preferably directly, resulted from de-juicing, typically and preferably, by mechanical pressing said vegan compatible raw material, and/or wherein said press cake typically and preferably directly, resulted from de-oiling, typically and preferably, by cold pressing said vegan compatible raw material.

In a further preferred embodiment, said vegan compatible raw material is a plant selected from herbs, nuts, berries, seeds, grains, cereals, spices, vegetables.

In a further preferred embodiment, said vegan compatible raw material is the whole edible part of a plant selected from herbs, nuts, berries, seeds, grains, cereals, spices, vegetables; or a by-product thereof, wherein said by-product, typically and preferably directly, resulted from cutting, slicing and/or hulling.

In a further preferred embodiment, said vegan compatible raw material, said blend of said vegan compatible raw materials, and/or said mixture of vegan compatible raw material, said blend of said vegan compatible raw materials and additionally comprising at least one, preferably one, vegan compatible binder component, is compiled according to pursued nutritional goals required by pertinent nutritional science knowledge or personalized nutrition requirements.

In another aspect, not part of the present invention it is provided a vegan convenience food (VCF) obtainable by the method according to the present invention.

In another aspect, not part of the present invention it is provided a vegan convenience food (VCF) comprising, preferably consisting of,
(i) a single vegan compatible raw material, or
(ii) a blend of two or more vegan compatible raw materials,
   wherein said single vegan compatible raw material (i) and wherein at least one of said two or more vegan compatible raw materials of said blend (ii) comprises a native binder component, or
(iii) a mixture comprising, preferably consisting of, a single vegan compatible raw material and at least one, preferably one, vegan compatible binder component, or
(iv) a mixture comprising, preferably consisting of, a blend of two or more vegan compatible raw materials and at least one, preferably one, vegan compatible binder component.

In a further preferred embodiment, said VCF is a solid VCF.

In a further preferred embodiment, said vegan compatible raw material is selected from the whole edible part of a harvested naturally occurring plant, mushroom or algae, the whole edible part of a harvested industrially cultivated algae or microorganism, the whole edible part of a dried, de-juiced and/or de-oiled vegan compatible raw material, or a by-product thereof, wherein preferably said by-product, preferably directly, resulted from cutting, slicing and/or hulling said vegan compatible raw material.

In a further preferred embodiment, said vegan compatible raw material is selected from the whole edible part of a harvested naturally occurring plant, mushroom or algae, the whole edible part of a harvested industrially cultivated algae or microorganism, or a by-product thereof, wherein preferably said by-product, preferably directly, resulted from cutting, slicing and/or hulling said vegan compatible raw material.

In a further preferred embodiment, said vegan compatible raw material is selected from the whole edible part of a dried, de-juiced and/or de-oiled vegan compatible raw material, or a by-product thereof, wherein preferably said by-product, preferably directly, resulted from cutting, slicing and/or hulling said vegan compatible raw material.

In a further preferred embodiment, said vegan compatible raw material, said blend of said vegan compatible raw materials, and/or said mixture of vegan compatible raw material, said blend of said vegan compatible raw materials and additionally comprising at least one, preferably one, vegan compatible binder component, is compiled according to pursued nutritional goals required by pertinent nutritional science knowledge or personalized nutrition requirements.

Conventionally provision of vegan nutrition is accomplished by diet recommendations involving different categories of plant source products like such rich in starch, fat and protein. The fabrication of exquisite VCF allows to combine different vegan compatible raw materials rich in both distinct essential nutritional ingredients and AFI in a standalone product.

The present invention teaches the disintegration of the structure of the original vegan compatible raw material and the conversion of the disintegrated vegan compatible raw material into the new VCF structure.

With the inventive methodology disclosed here this is achieved by disrupting the natural structure of the vegan compatible raw material by comminuting and subsequently rearranging the comminuted vegan compatible raw material to yield the structure of the VCF, taking, if possible, advantage of vegan compatible raw material inherent components exhibiting binding properties.

In particular, the step (e) of the inventive method, namely the wet heating of the portioned paste of step (d) induces and/or completes cohesion of loosely assembled binder ingredients of vegan compatible raw materials, as described herein, and solidifies said paste to generate the inventive VCF, by steam or warm to hot water exposure.

The terms "binder or vegan compatible raw material with binder properties" as used herein refer to any component or substance that produces or promotes cohesion in loosely assembled ingredients of the food matrix to form a physically and chemically cohesive whole by adhesion or cohesion such that it allows the generation of a VCF in accordance with the present invention. In foods, many components have binder properties in particular, natural proteins and polysaccharides are among the most abundant components that can be used for creating VCF structures owing to their supramolecular interactions driven by attractive or repulsive forces (W. Wijaya et al, Trends in Food Science & Technology 68 (2017) 56-69).

As outlined above the range of vegan compatible raw material for the production of VCF is considerable and yet many do not contain proteins and polysaccharides with binder properties at all or in a sufficient amount. As part of the inventive methodology disclosed herein a vegan compatible raw material with binder properties is routinely identified by mixing approximately three parts of the powdered vegan compatible raw material to be tested with two parts of water (weight/weight). Processing for powder production of a vegan compatible raw material is disclosed in the following section. The mix is thoroughly stirred and kneaded. If the vegan compatible raw material contains binder components such as proteins and/or polysaccharides with binder properties a paste forms and said paste can be solidified by steaming or placing in hot water with a temperature equal or above 80 °C, typically and preferably at a temperature of 80 °C to 95°C, for 10 minutes to 2 hours, preferably for 10 minutes to 1 hours, again further preferably for 30 minutes. Production of a VCF from a vegan compatible raw material not containing proteins and polysaccharides with binder properties requires to include in the blend a vegan compatible raw material containing such or addition of isolated protein and/or polysaccharides with binder properties such as yellow pea protein, wheat protein or rice flour.

In a first teaching the present invention discloses the process for breaking the original structure of a vegan compatible raw material by comminution. The properties of vegan compatible raw material used for producing a VCF vary greatly. They range from hard cereal grains to oil crop seeds, vegetables and mushrooms to mention only a few. Consequently, the comminution technique requires corresponding adaptations. For the comminution of a vegan compatible raw material subsequently used singly or in blends for VCF production, the following techniques, combinations or equivalents thereof are appropriate:
Dry milling (typically for solid grains and seeds), cryo-milling (typically for oil crop seeds, nuts and berries), bowl cutting and homogenisation (typically for vegetables, mushrooms and roots). The comminuted vegan compatible raw material accumulates as powder (from dry and cryo-milling) and as slurry (from bowl cutting and homogenisation). The latter may also be converted into a powder by lyophilisation or other drying methods should it be required or desired by subsequent processing. Particularly comminution by dry or cryo-milling has a decisive effect on the structure of the VCF. Generally, finely dry or cryo-milled vegan compatible raw materials yield fine and firm VCF structures whereas coarsely dry or cryo-milled vegan compatible raw materials yield coarse and loose VCF structures. With particle sizes of dry or cryo-milled powders in the range of between 100 and 1'000 µm the texture of the VCF can be well tailored.

The second teaching of the present invention discloses the production of a VCF from a comminuted vegan compatible raw material (powder or slurry) whereby it is essential that such contain proteins and/or polysaccharides with binder properties. Water up to a final water content of 10 to 90% (dry weight basis), preferentially 20 to 70 % (dry weight basis), is added to a powder or a slurry of a single vegan compatible raw material or a blend of powders and/or slurries of two or more vegan compatible raw materials under stirring until a paste results. If the use of a too watery slurry does not allow to make a paste with the recommended water content the slurry is dried by lyophilisation or any other drying method and is used as powder. Furthermore, oil could be added when only low fat vegan compatible raw materials are used for VCF production in order to balance the nutritional composition.

Water content of said paste impacts the firmness of the final VCF. Generally, low water contents (below about 40 % dry weight basis) yield a structured solid VCF whereas high water contents (above about 40 % dry weight basis) yield an unstructured soft VCF. However, the nature of the proteins and/or polysaccharides of vegan compatible raw materials with binder properties has far more influence on the final structure of the VCF which may further be tailored by integrating finely chopped vegan compatible raw materials like legumes or mushrooms to a powder or a slurry of a single vegan compatible raw material or a blend of powders and/or slurries of two or more vegan compatible raw materials. Supplementation is optionally and preferably done before the addition of water.

The paste resulting from the addition of water to a single or a blend of comminuted vegan compatible raw materials is optionally spiced up and subsequently portioned into a certain VCF shape such as stockpile pieces, strips, sausages, ready-to-fry flat designs or any other VCF shape.

In a further embodiment, said portioned paste is left for an hour or more, typically for a period of 30 minutes to 6 hours, cooled or at ambient temperature to complete water binding and then subjected to wet heat treatment preferably by steaming or putting in warm or hot water at a temperature between 30 to 100 °C, typically between 50 to 100°C, preferably between 80 to 100 °C for 3 min or more, typically for a period of 5 minutes to 2 hours, preferably for a period of 5 minutes to 1 hour, further preferably for a period of 5 to 30 minutes, for solidifying said portioned paste which constitutes the innovative VCF. This ensures cohesion of loosely assembled binder ingredients of vegan compatible raw materials, as described herein, and solidifies said paste to generate the inventive VCF.

Alternatively, VCF shaping may be done by 3D-printing. Thus, in a further embodiment of step (d), said paste of step (c) is portioned into a VCF shape, wherein preferably said VCF shape is selected from stockpile pieces, strips, sausages, ready-to-fry flat designs or any other VCF shapes.

In a further embodiment, said portioning or 3D-printing the paste of step (c), preferably said portioning the paste of step (c), refers to portioning or 3D-printing, preferably portioning, the paste of step (c), which paste directly resulted from said step (c) of the inventive method of adding water to said powder or slurry making said paste.

In a further embodiment, said portioning or 3D-printing the paste of step (c), preferably said portioning the paste of step (c), refers to portioning or 3D-printing, preferably portioning, the paste of step (c), which paste resulted from said step (c) of the inventive method of adding water to said powder or slurry making said paste without any further processing step.

In a further embodiment, said portioning or 3D-printing the paste of step (c), preferably said portioning the paste of step (c), refers to portioning or 3D-printing, preferably portioning, the paste of step (c), which paste resulted from said step (c) of the inventive method of adding water to said powder or slurry making said paste without any further processing step apart from an optional spicing of said paste prior or within portioning the paste into a VCF shape.

In a further embodiment, said step of wet heating the portioned paste of step (d) for solidifying said paste to generate the VCF is effected on said portioned paste of step (d) without any further processing step. In a further embodiment, said step of wet heating the portioned paste of step (d) for solidifying said paste to generate the VCF is effected on said portioned paste of step (d) without any further processing step, apart from an optional spicing of said portioned paste resulted from step (d). In a further embodiment, said step of wet heating the portioned paste of step (d) for solidifying said paste to generate the VCF is effected directly on said portioned paste of step (d) without any further processing step, apart from an optional spicing of said portioned paste resulted from step (d).

In a further embodiment, said step (d) of portioning or 3D-printing, preferably portioning, the paste of step (c) into a VCF shape and said step (e) of wet heating the portioned paste of step (d) for solidifying said paste to generate the VCF are effected sequentially. In a further embodiment, said step (d) of portioning or 3D-printing, preferably portioning, the paste of step (c) into a VCF shape and said step (e) of wet heating the portioned paste of step (d) for solidifying said paste to generate the VCF are sequential steps.

In a further embodiment, said step (d) of portioning or 3D-printing, preferably portioning, the paste of step (c) into a VCF shape and said step (e) of wet heating the portioned paste of step (d) for solidifying said paste to generate the VCF are effected sequentially without any intermediate processing step, apart from an optional spicing of said portioned paste resulted from step (d).

In a further embodiment, said step (d) of portioning or 3D-printing, preferably portioning, the paste of step (c) into a VCF shape and said step (e) of wet heating the portioned paste of step (d) for solidifying said paste to generate the VCF are sequential steps without any intermediate processing step, apart from an optional spicing of said portioned paste resulted from step (d).

### EXAMPLES

### Example 1: Spread-like VCF

| **Vegan compatible raw material** | **Amount (g)** | **Comminution** | **VCF formation** |
|---|---|---|---|
| Hulled hemp seeds | 85 | Cryo-milled with a Hammerwitt 3 mill equipped with a 250 µm sieve, after freezing with liquid N₂ and maintaining cooling during milling with liquid N₂ | The hemp powder is mixed with about 20 g of water until a paste results. Said paste is left for 1 hour at ambient temperature to complete water binding, shaped into flat design piece and steamed for 10 min yielding a spread-like VCF. |

### Example 2: Tofu-like VCF

| **Vegan compatible raw material** | **Amount (g)** | **Comminution** | **VCF formation** |
|---|---|---|---|
| Pumpkin seeds | 85 | Cryo-milled with a Hammerwitt 3 mill equipped with a 250 µm sieve, after freezing with liquid N₂ and maintaining cooling during milling with liquid N₂ | The blend of the three components is mixed with 100 g of water until a paste results. Said paste is shaped to a chunk, left for 1 hour at ambient temperature to complete water binding und steamed for 10 min yielding a tofu-like VCF |
| Yellow peas | 50 | Cryo-milled with a Hammerwitt 3 mill equipped with a 250 µm sieve, after freezing with liquid N₂ and maintaining cooling during milling with liquid N₂ | |
| Yeast protein | 50 | Commercial powder | |

### Example 3: Burger-like mushroom VCF

| **Vegan compatible raw material** | **Amount (g)** | **Comminution** | **VCF formation** |
|---|---|---|---|
| Yellow peas | 120 | Cryo-milled with a Hammerwitt 3 mill equipped with a 250 µm sieve, after freezing with liquid N₂ and maintaining cooling during milling with liquid N₂ | The blend of the four components is mixed until a paste results whereby water is drawn from the fresh mushrooms. Said paste is spiced with paprika, salt, onion powder, shaped to burger sized pieces, left for 1 hour to complete water binding and steamed for 10 min yielding a burger-like mushroom VCF |
| Sunflower | 40 | Cryo-milled with a Hammerwitt 3 mill equipped with a 250 µm sieve, after freezing with liquid N₂ and maintaining cooling during milling with liquid N₂ | |
| Fresh button mushroom | 250 | chopped into small pieces | |
| Yeast extract | 20 | Commercial powder | |

### Example 4: Vegetable burger-like VCF

| **Vegan compatible raw material** | **Amount (g)** | **Comminution** | **VCF formation** |
|---|---|---|---|
| Chickpea | 120 | Cryo-milled with a Hammerwitt 3 mill equipped with a 250 µm sieve, after freezing with liquid N₂ and maintaining cooling during milling with liquid N₂ | Oil, chickpea and yeast extract powder are thoroughly mixed before the chopped vegetables are added and the blend mixed until a paste results, whereby water is drawn from the chopped vegetables. Said paste is spiced (curry, salt, onion powder), shaped to burger size pieces, left for 1 hour at ambient temperature to complete water binding and steamed for 10 min yielding a vegetable burger-like VCF |
| Yeast extract | 25 | Commercial powder | |
| Tomato | 25 | Chopped into small pieces | |
| Carrots | 25 | | |
| Broccoli | 25 | | |
| Dried Boletus mushroom | 25 | | |
| Sunflower oil | 15 | Commercial oil | |

### Example 5: Small pieces VCF

| **Vegan compatible raw material** | **Amount (g)** | **Comminution** | **VCF formation** |
|---|---|---|---|
| Yellow pea | 100 | Cryo-milled with a Hammerwitt 3 mill equipped with a 250 µm sieve, after freezing with liquid N₂ and maintaining cooling during milling with liquid N₂ | The blend of the four components is mixed with 70 g of water until a paste results. Said paste is spiced (salt, onion powder), plucked into small chunks, left for 1 hour to complete water binding und steamed for 10 min yielding a small pieces VCF |
| Wheat protein | 50 | Commercial powder | |
| Yeast extract | 20 | Commercial powder | |
| Sunflower oil | | Commercial oil | |

## Claims

1. A process for producing a vegan convenience food (VCF), wherein said process comprises, preferably consists of, the steps:
(a) providing
(i) a single vegan compatible raw material, or
(ii) a blend of two or more vegan compatible raw materials,
wherein said single vegan compatible raw material (i) and wherein at least one of said two or more vegan compatible raw materials of said blend (ii) comprises a native binder component, or
(iii) a mixture comprising, preferably consisting of, a single vegan compatible raw material and at least one, preferably one, vegan compatible binder component, or
(iv) a mixture comprising, preferably consisting of, a blend of two or more vegan compatible raw materials and at least one, preferably one, vegan compatible binder component;
(b) comminuting said vegan compatible raw material (i), said blend of vegan compatible raw materials (ii) or said mixture (iii) or (iv) into a powder with a particle size between 100 and 1'000 µm, preferably by dry milling or cryo-milling; or
comminuting said vegan compatible raw material (i), said blend of vegan compatible raw materials (ii) or said mixture (iii) or (iv) into a slurry, preferably by bowl cutting or homogenization, and optionally converting said slurry into a powder by lyophilisation or another drying method, preferably by lyophilisation;
(c) adding water to said powder or said slurry of step b) to make a paste with a water content between 10 and 90 % on dry weight basis, preferably between 20 and 70 % on dry weight basis;
(d) portioning or 3D-printing the paste of step (c) into a VCF shape, wherein preferably said VCF shape is selected from stockpile pieces, strips, sausages, ready-to-fry flat designs or any other VCF shapes;
(e) wet heating the portioned paste of step (d) for solidifying said paste to generate the VCF;
wherein the steps (a) to (e) are effected in said given order, and wherein said process does not comprise the addition or usage of an enzyme.

2. The process according to claim 1, wherein said wet heating of said portioned paste of step (d) for solidifying said paste to generate the VCF is effected by steaming or putting in warm or hot water at a temperature between 50°C to 100°C, preferably between 80°C to 100°C for 3 min or more, typically for a period of 5 minutes to 2 hours.

3. The process according to claim 1 or claim 2, wherein said solidifying of said paste to generate the VCF (i) does not comprise dry heating, wherein preferably said heat is a temperature higher than 100°C, and/or (ii) does not comprise extrusion or extrusion cooking of said paste to generate the VCF.

4. The process according to any one of the claims 1 to 3, wherein said step (c) of making a paste does not comprise the addition of any other vegan compatible component to said powder or said slurry.

5. The process according to any one of the claims 1 to 4, wherein said vegan compatible raw material is selected from a plant, a mushroom, an algae or a microorganism.

6. The process according to any one of the claims 1 to 5, wherein said vegan compatible raw material is selected from the whole edible part of a plant, a mushroom, an algae or a microorganism, or a by-product thereof, wherein preferably said by-product resulted from cutting, slicing and/or hulling said vegan compatible raw material.

7. The process according to any one of the claims 1 to 6, wherein said vegan compatible raw material is selected from the whole edible part of a harvested naturally occurring plant, mushroom or algae, the whole edible part of a harvested industrially cultivated algae or microorganism, the whole edible part of a dried, de-juiced and/or de-oiled vegan compatible raw material, or a by-product thereof, wherein preferably said by-product resulted from cutting, slicing and/or hulling said vegan compatible raw material.

8. The process according to any one of the claims 1 to 7, wherein said vegan compatible raw material is selected from the whole edible part of a dried, de-juiced and/or de-oiled vegan compatible raw material, or a by-product thereof, wherein preferably said by-product resulted from cutting, slicing and/or hulling said vegan compatible raw material.

9. The process according to any one of the claims 1 to 8, wherein said vegan compatible raw material is selected from the whole edible part of a dried, de-juiced and/or de-oiled vegan compatible raw material, or a by-product thereof, wherein preferably said by-product resulted from cutting, slicing and/or hulling said vegan compatible raw material, and wherein said de-juicing is effected by mechanical pressing said vegan compatible raw material, and/or wherein said de-oiling is effected by cold pressing said vegan compatible raw material

10. The process according to any one of the claims 1 to 9, wherein said vegan compatible raw material is selected from the whole edible part of a harvested naturally occurring plant, mushroom or algae, the whole edible part of a harvested industrially cultivated algae or microorganism, or a by-product thereof, wherein preferably said by-product resulted from cutting, slicing and/or hulling said vegan compatible raw material.

## Patentansprüche

1. Prozess zum Herstellen eines veganen Fertiggerichts (VCF), wobei der Prozess die Schritte umfasst, vorzugsweise aus diesen besteht:
(a) Bereitstellen
(i) eines einzigen veganverträglichen Rohstoffs oder
(ii) einer Mischung aus zwei oder mehr veganverträglichen Rohstoffen,
wobei der einzige veganverträgliche Rohstoff (i) und wobei mindestens einer der zwei oder mehr veganverträglichen Rohstoffe der Mischung (ii) eine native Bindemittelkomponente umfasst, oder
(iii) einer Mischung umfassend, vorzugsweise bestehend aus, einem einzigen veganverträglichen Rohstoff und mindestens einer, vorzugsweise einer, veganverträglichen Bindemittelkomponente, oder
(iv) eine Mischung, umfassend, vorzugsweise bestehend aus, einer Mischung aus zwei oder mehr veganverträglichen Rohstoffen und mindestens einer, vorzugsweise einer, veganverträglichen Bindemittelkomponente;
(b) Zerkleinern des veganverträglichen Rohstoffs (i), der Mischung aus veganverträglichen Rohstoffen (ii) oder der Mischung (iii) oder (iv) zu einem Pulver mit einer Partikelgröße zwischen 100 und 1.000 µm, vorzugsweise durch Trockenmahlen oder Kryomahlen; oder
Zerkleinern des veganverträglichen Rohstoffs (i), der Mischung aus veganverträglichen Rohstoffen (ii) oder der Mischung (iii) oder (iv) zu einer Aufschlämmung, vorzugsweise durch Kuttern oder Homogenisierung, und optional Umwandeln der Aufschlämmung in ein Pulver durch Gefriertrocknung oder ein anderes Trocknungsverfahren, vorzugsweise durch Gefriertrocknung;
(c) Hinzufügen von Wasser zu dem Pulver oder der Aufschlämmung aus Schritt b), um eine Paste mit einem Wassergehalt zwischen 10 und 90 % auf Trockengewichtsbasis, vorzugsweise zwischen 20 und 70 % auf Trockengewichtsbasis zu produzieren;
(d) Portionieren oder 3D-Drucken der Paste aus Schritt (c) in eine VCF-Form, wobei die VCF-Form vorzugsweise aus Vorratsstücken, Streifen, Würstchen, frittierfertigen flachen Designs oder beliebigen anderen VCF-Formen ausgewählt ist;
(e) Nasserhitzen der portionierten Paste aus Schritt (d) zum Verfestigen der Paste, um das VCF zu erzeugen;
wobei die Schritte (a) bis (e) in der angegebenen Reihenfolge durchgeführt werden und wobei der Prozess nicht die Hinzufügung oder Verwendung eines Enzyms umfasst.

2. Prozess nach Anspruch 1, wobei das Nasserhitzen der portionierten Paste aus Schritt (d) zum Verfestigen der Paste, um das VCF zu erzeugen, durch Dämpfen oder Einlegen in warmes oder heißes Wasser mit einer Temperatur zwischen 50 °C und 100 °C, vorzugsweise zwischen 80 °C und 100 °C für 3 Minuten oder mehr, üblicherweise für einen Zeitraum von 5 Minuten bis 2 Stunden, durchgeführt wird.

3. Prozess nach Anspruch 1 oder 2, wobei das Verfestigen der Paste, um das VCF zu erzeugen, (i) kein Trockenerhitzen umfasst, wobei die Hitze vorzugsweise eine Temperatur über 100 °C ist, und/oder (ii) keine Extrusion oder Extrusionskochen der Paste, um das VCF zu erzeugen, umfasst.

4. Prozess nach einem der Ansprüche 1 bis 3, wobei der Schritt (c) des Produzierens einer Paste nicht die Hinzufügung einer beliebigen anderen veganverträglichen Komponente zu dem Pulver oder der Aufschlämmung umfasst.

5. Prozess nach einem der Ansprüche 1 bis 4, wobei der veganverträgliche Rohstoff aus einer Pflanze, einem Pilz, einer Alge oder einem Mikroorganismus ausgewählt ist.

6. Prozess nach einem der Ansprüche 1 bis 5, wobei der veganverträgliche Rohstoff aus dem gesamten essbaren Teil einer Pflanze, eines Pilzes, einer Alge oder eines Mikroorganismus oder einem Nebenprodukt davon ausgewählt ist, wobei das Nebenprodukt vorzugsweise durch Schneiden, Hobeln und/oder Schälen des veganverträglichen Rohstoffs entsteht.

7. Prozess nach einem der Ansprüche 1 bis 6, wobei der veganverträgliche Rohstoff aus dem gesamten essbaren Teil einer geernteten natürlich vorkommenden Pflanze, eines Pilzes oder einer Alge, dem gesamten essbaren Teil einer geernteten industriell gezüchteten Alge oder eines Mikroorganismus, dem gesamten essbaren Teil eines getrockneten, entsafteten und/oder entölten veganverträglichen Rohstoffs oder einem Nebenprodukt davon ausgewählt ist, wobei das Nebenprodukt vorzugsweise durch Schneiden, Hobeln und/oder Schälen des veganverträglichen Rohstoffs entsteht.

8. Prozess nach einem der Ansprüche 1 bis 7, wobei der veganverträgliche Rohstoff aus dem gesamten essbaren Teil eines getrockneten, entsafteten und/oder entölten veganverträglichen Rohstoffs oder einem Nebenprodukt davon ausgewählt ist, wobei das Nebenprodukt vorzugsweise durch Schneiden, Hobeln und/oder Schälen des veganverträglichen Rohstoffs entsteht.

9. Prozess nach einem der Ansprüche 1 bis 8, wobei der veganverträgliche Rohstoff aus dem gesamten essbaren Teil eines getrockneten, entsafteten und/oder entölten veganverträglichen Rohstoffs oder einem Nebenprodukt davon ausgewählt ist, wobei das Nebenprodukt vorzugsweise durch Schneiden, Hobeln und/oder Schälen des veganverträglichen Rohstoffs entsteht, und wobei das Entsaften durch mechanisches Pressen des veganverträglichen Rohstoffs durchgeführt wird und/oder wobei das Entölen durch Kaltpressen des veganverträglichen Rohstoffs durchgeführt wird.

10. Prozess nach einem der Ansprüche 1 bis 9, wobei der veganverträgliche Rohstoff aus dem gesamten essbaren Teil einer geernteten natürlich vorkommenden Pflanze, eines Pilzes oder einer Alge, dem gesamten essbaren Teil einer geernteten industriell gezüchteten Alge oder eines Mikroorganismus oder einem Nebenprodukt davon ausgewählt ist, wobei das Nebenprodukt vorzugsweise durch Schneiden, Hobeln und/oder Schälen des veganverträglichen Rohstoffs entsteht.

## Revendications

1. Processus pour la production d'un plat préparé végétalien (VCF), dans lequel ledit processus comprend, et de préférence consiste en, les étapes suivantes :
(a) fourniture
(i) d'une unique matière brute compatible avec le régime végétalien, ou
(ii) d'un mélange de deux matières brutes ou plus compatibles avec le régime végétalien,
dans lequel ladite unique matière brute compatible avec le régime végétalien (i) et dans lequel au moins l'une parmi lesdites deux matières brutes ou plus compatibles avec le régime végétalien dudit mélange (ii) comprend un composant liant natif, ou
(iii) d'une composition comprenant, de préférence constituée de, une unique matière brute compatible avec le régime végétalien et au moins un, de préférence un, composant liant compatible avec le régime végétalien, ou
(iv) d'une composition comprenant, de préférence constituée de, un mélange de deux matières brutes ou plus compatibles avec le régime végétalien et au moins un, de préférence un, composant liant compatible avec le régime végétalien ;
(b) morcelage de ladite matière brute compatible avec le régime végétalien (i), dudit mélange de matières brutes compatibles avec le régime végétalien (ii) ou de ladite composition (iii) ou (iv) en une poudre avec une taille des particules comprise entre 100 et 1 000 µm, de préférence par broyage à sec ou par broyage cryogénique ; ou
morcelage de ladite matière brute compatible avec le régime végétalien (i), dudit mélange de matières brutes compatibles avec le régime végétalien (ii) ou de ladite composition (iii) ou (iv) en une suspension, de préférence par une coupeuse agroalimentaire à bol ou par homogénéisation, et éventuellement conversion de ladite suspension en une poudre par lyophilisation ou par un autre procédé de séchage, de préférence par lyophilisation ;
(c) ajout d'eau à ladite poudre ou à ladite suspension de l'étape (b) pour créer une pâte avec une teneur en eau comprise entre 10 et 90 % sur la base du poids sec, de préférence entre 20 et 70 % sur la base du poids sec ;
(d) découpe en portions ou impression 3D de la pâte de l'étape (c) en une forme de VCF, dans lequel, de préférence, ladite forme de VCF est choisie parmi des boîtes de conserve, filets, saucisses, modèles plats prêts à poêler ou toute autre forme de VCF ;
(e) chauffage par voie humide de la pâte découpée en portions de l'étape (d) pour solidifier ladite pâte afin de générer le VCF ;
dans lequel les étapes (a) à (e) sont effectuées dans ledit ordre indiqué, et dans lequel ledit processus ne comprend pas l'ajout ou l'utilisation d'un enzyme.

2. Processus selon la revendication 1, dans lequel ledit chauffage par voie humide de ladite pâte découpée en portions de l'étape (d) pour solidifier ladite pâte afin de générer le VCF est effectué par vaporisation ou par mise dans de l'eau chaude ou très chaude à une température comprise entre 50 °C et 100 °C, de préférence entre 80 °C et 100 °C pendant 3 min ou plus, typiquement pendant une période allant de 5 minutes à 2 heures.

3. Processus selon la revendication 1 ou la revendication 2, dans lequel ladite solidification de ladite pâte afin de générer le VCF (i) ne comprend pas de chauffage à sec, dans lequel, de préférence, ladite chaleur est une température supérieure à 100 °C, et/ou (ii) ne comprend pas d'extrusion ou de cuisson-extrusion de ladite pâte afin de générer le VCF.

4. Processus selon l'une quelconque des revendications 1 à 3, dans lequel ladite étape (c) de création d'une pâte ne comprend pas l'ajout de quelconque autre composant compatible avec le régime végétalien à ladite poudre ou à ladite suspension.

5. Processus selon l'une quelconque des revendications 1 à 4, dans lequel ladite matière brute compatible avec le régime végétalien est choisie parmi une plante, champignon, algue ou micro-organisme.

6. Processus selon l'une quelconque des revendications 1 à 5, dans lequel ladite matière brute compatible avec le régime végétalien est choisie parmi la partie comestible entière d'une plante, champignon, algue ou micro-organisme, ou un sous-produit de celles-ci, dans lequel, de préférence, ledit sous-produit résulte d'un découpage, tranchage et/ou décorticage de ladite matière brute compatible avec le régime végétalien.

7. Processus selon l'une quelconque des revendications 1 à 6, dans lequel ladite matière brute compatible avec le régime végétalien est choisie parmi la partie comestible entière d'une plante, champignon ou algue naturel récolté, la partie comestible entière d'une algue ou d'un micro-organisme cultivé industriellement récolté, la partie comestible entière d'une matière brute compatible avec le régime végétalien séchée, déshydratée et/ou déshuilée, ou un sous-produit de celles-ci, dans lequel, de préférence, ledit sous-produit résulte d'un découpage, tranchage et/ou décorticage de ladite matière brute compatible avec le régime végétalien.

8. Processus selon l'une quelconque des revendications 1 à 7, dans lequel ladite matière brute compatible avec le régime végétalien est choisie parmi la partie comestible entière d'une matière brute compatible avec le régime végétalien séchée, déshydratée et/ou déshuilée, ou un sous-produit de celles-ci, dans lequel, de préférence, ledit sous-produit résulte d'un découpage, tranchage et/ou décorticage de ladite matière brute compatible avec le régime végétalien.

9. Processus selon l'une quelconque des revendications 1 à 8, dans lequel ladite matière brute compatible avec le régime végétalien est choisie parmi la partie comestible entière d'une matière brute compatible avec le régime végétalien séchée, déshydratée et/ou déshuilée, ou un sous-produit de celle-ci, dans lequel, de préférence, ledit sous-produit résulte d'un découpage, tranchage et/ou décorticage de ladite matière brute compatible avec le régime végétalien, et dans lequel ladite déshydratation est effectuée par un pressage mécanique de ladite matière brute compatible avec le régime végétalien, et/ou dans lequel ledit déshuilage est effectué par un pressage à froid de ladite matière brute compatible avec le régime végétalien.

10. Processus selon l'une quelconque des revendications 1 à 9, dans lequel ladite matière brute compatible avec le régime végétalien est choisie parmi la partie comestible entière d'une plante, champignon ou algue naturel récolté, la partie comestible entière d'une algue ou d'un micro-organisme cultivé industriellement récolté, ou un sous-produit de celles-ci, dans lequel, de préférence, ledit sous-produit résulte d'un découpage, tranchage et/ou décorticage de ladite matière brute compatible avec le régime végétalien.
